# EUROPEAN PATENT SPECIFICATION

(11) **EP 3 007 541 B1**
(45) Date of publication and mention of the grant of the patent: **08.08.2018**
(21) Application number: 14733739.8
(22) Date of filing: 06.06.2014
(51) Int. Cl.: A01D 90/08, A01F 25/14, A01F 15/07

(54) **APPARATUS AND METHODS FOR GATHERING AND WRAPPING BALES**
VORRICHTUNG UND VERFAHREN ZUM AUFSAMMELN UND VERPACKEN VON BALLEN
APPAREIL ET MÉTHODES DE COLLECTE ET L'EMBALLAGE DE BALLES

(30) Priority: 14.06.2013 US 201361835166 P
(43) Date of publication of application: 20.04.2016
(73) Proprietor: Vermeer Manufacturing Company, Pella, IA 50219 (US)
(72) Inventor: THOMPSON, Kent, Otley, Iowa 50214 (US)
(74) Representative: Worthington, Richard Easton
(86) International application number: PCT/NL2014/050363
(87) International publication number: WO 2014/200337

(56) References cited:
- CA-A1- 2 152 295
- GB-A- 2 136 761
- GB-A- 2 394 932
- US-A- 4 044 906
- US-A- 4 945 715
- US-A- 5 220 772
- US-A- 5 725 346

## Description

### FIELD OF THE DISCLOSURE

The field of this disclosure relates to apparatus and methods for gathering bales and, in particular, apparatus and methods that involve wrapping bales during or prior to unloading of bales. In particular embodiments, a module of bales is gathered on the apparatus and the module is wrapped and unloaded from the apparatus. The wrapped module may be reloaded on the apparatus and transported for further use.

### BACKGROUND

Crop forages such as hay (e.g., alfalfa and/or grass hay) are periodically cut in the field, dried and compacted into bales for transport and storage of the forage material. Recent evolutions in row crop production and in technology for processing these materials have led to changes in the scale and economics of harvest and to increasing potential for harvest of crop residues like corn stover. Corn stover is also baled in the field and used as livestock feed, bedding or production of biofuels. In addition, harvest technology for cotton that includes the step of baling the cotton in the field has been developed. Due to these relatively recent changes, the scale at which this type of harvest process is conducted in some instances is different than the traditional process. The density of the bales, in terms of the number of bales per acre, is higher in some instances, the labor availability is less in some instances and the criticality of timing is higher in some instances.

In some cases and, in particular when silage material is baled, it may be desirable to wrap the bales in protective material such as plastic. Wrapping the silage promotes the ensiling process in which the material ferments thereby improving the digestibility of the material for ruminants. Silage may be composed of various materials such as field crops or various grasses or legumes (i.e., alfalfa). In the case of forage bales, wrapping the bales allows the bales to be protected from rain and precipitation which may degrade the nutrient value of the material.

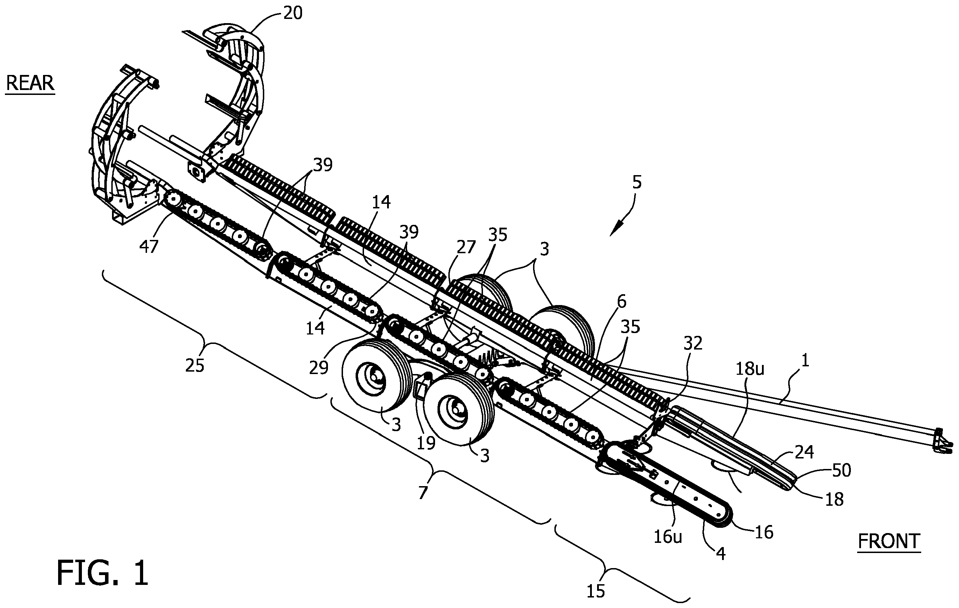

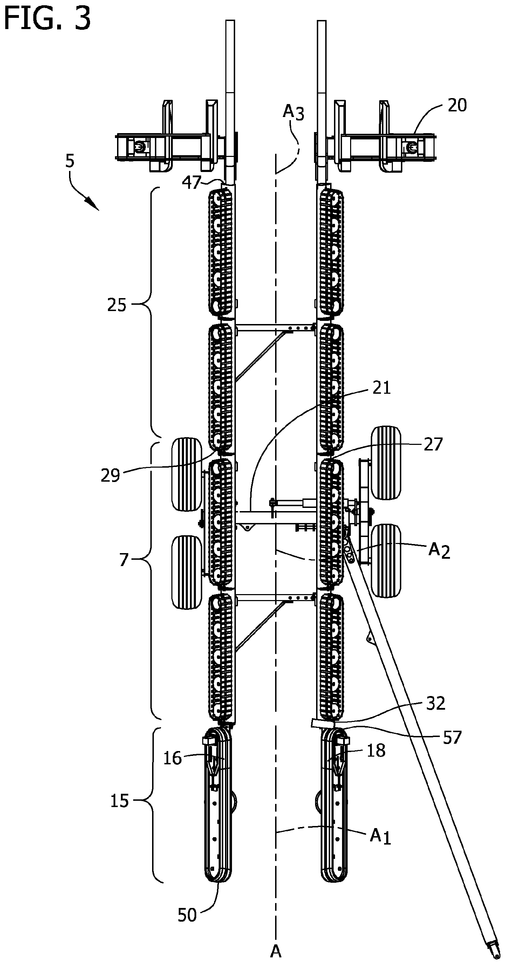

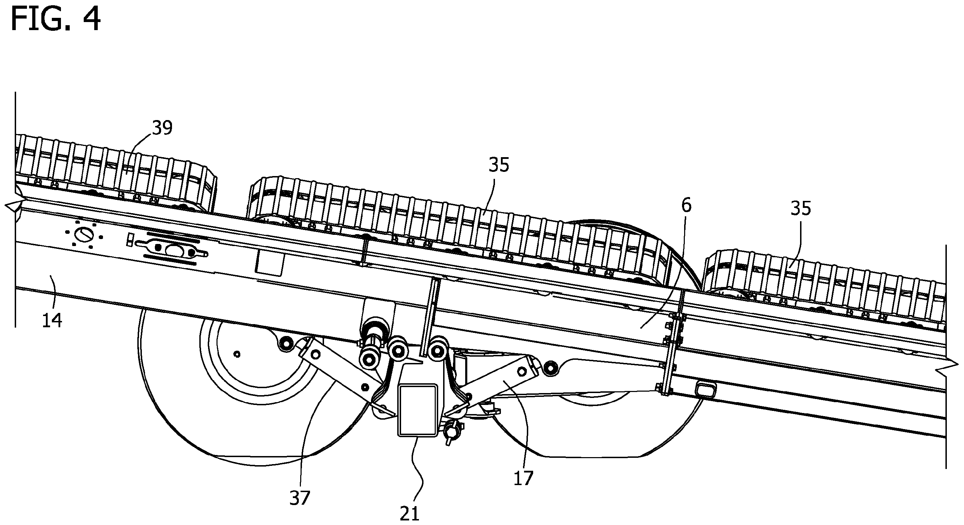

US 5725346 discloses a bale handling and transporting apparatus 12. A bale handler 14 grasps a bale 15, lift the bale 15 onto a body, and can also unload the bale from this body 16, cf. Fig. 1 and Fig. 3. The elongated body 16 comprises a hitch and (front) portion 134, a tail end (rear) portion 135, a first bed section 44, a second bed section 46, and an endless conveyer belt 132, cf. the top view of Fig. 4. The bale handler 14 has an upright boom 18, a boom arm 24, and a bale gripper 26, cf. Fig. 1. The portion 28 of the boom arm 24 is attached to an upright boom section 72 of the upright boom 18 by the pin 86, cf. Fig. 1, Fig. 3.

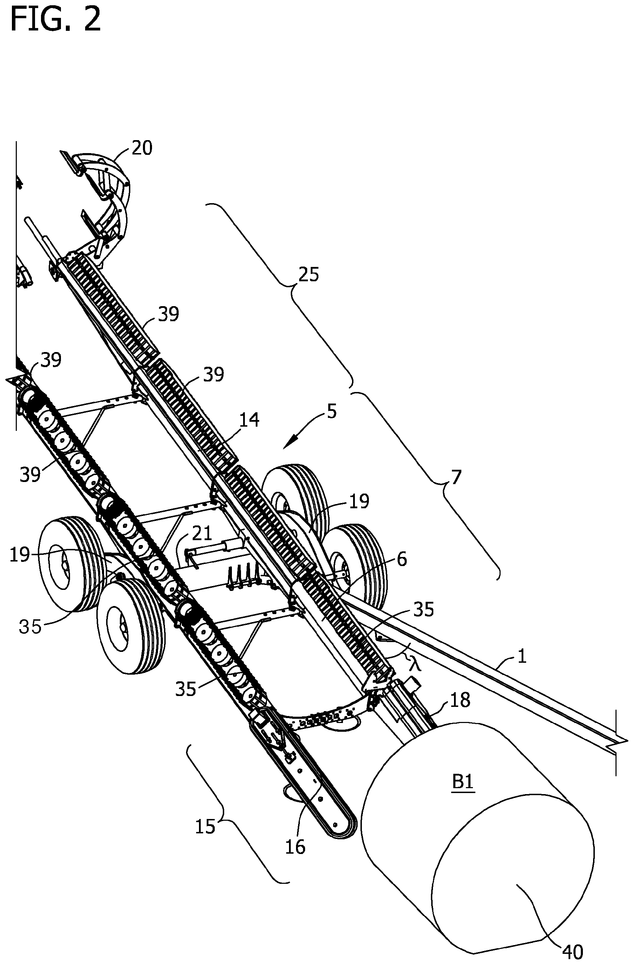

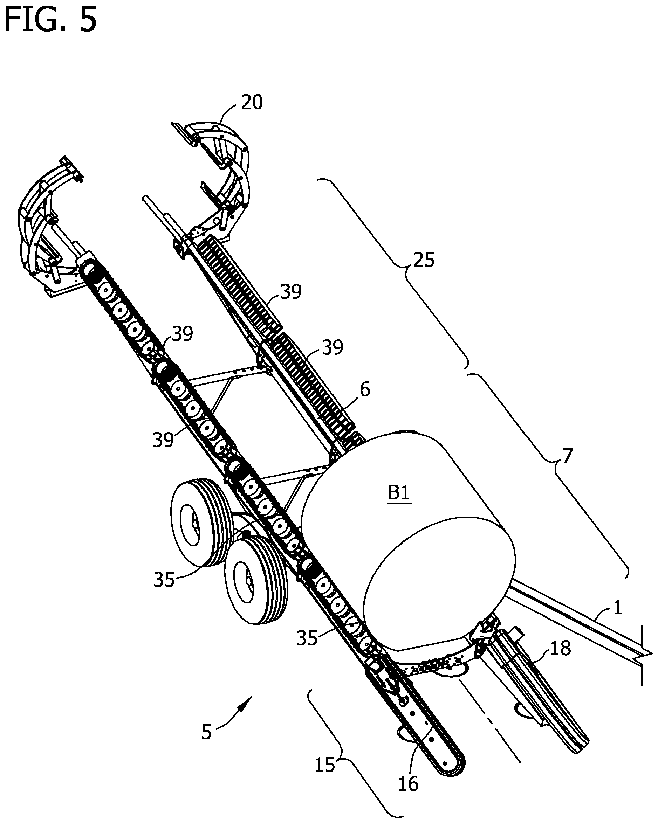

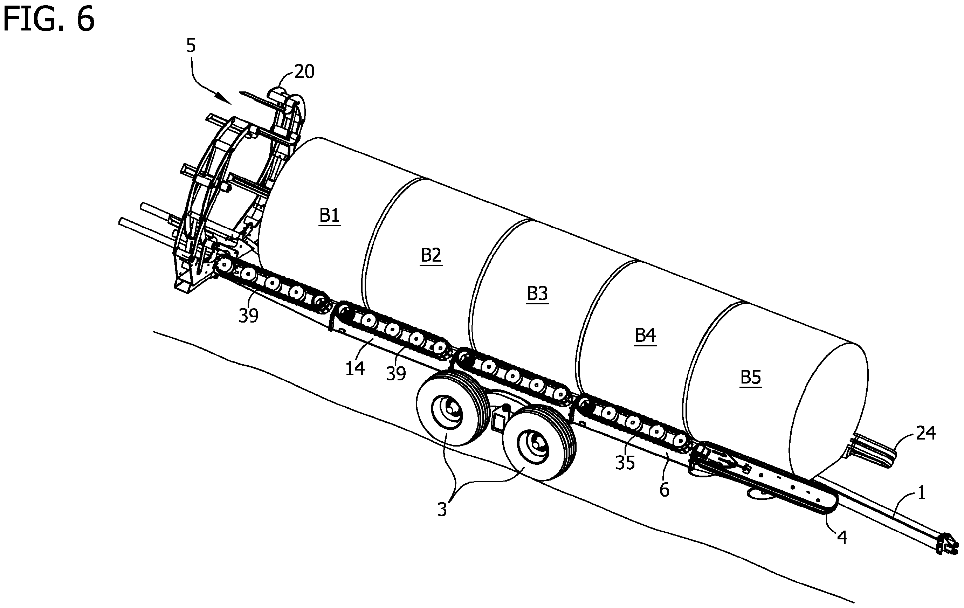

CA 2152295 A1 discloses a bale bagger 10 with a bale carrier 16 supported on ground wheels 17, cf. Fig. 1. Along the length of the bale carrier 16 a bale supporting bed extends. A pusher 22 pushes a bale along two spaced apart rails 20 of the bed 18. A drum 12 is mounted on a skid-type base 14. The drum 12 includes a drum support ring 88 which is mounted on a rear cross member 74, cf. Fig. 4. The drum support ring 88 carries a winch bracket 110 on which a manual winch 112 is mounted. A cable 118 is wound on the winch 122 and extends around a pulley 116 and is connected to an eye 120. This enables the upper segment 98 of the drum support ring 88 to pivot down, cf. Fig. 4 and Fig. 5. The drum achieves a smaller circumferential size. Fig. 6 shows the drum 88 in a top view. A bale is bagged into a plastic tube. The carrier 16 is tilted, cf. Fig. 2. The skid 14 touches the ground. A bale is pushed into a plastic tube. The plastic tube may be tight off and cut. A sequence of bales can be put into plastic tubes.

US 4044906 discloses an implement for transporting bales. The implement has a horizontal bed 20 with a front end 21 and a rear end 23. The implement can be connected with a pulling vehicle by means of a tongue 28. A conveyer 74 of the bed comprises a pair of continuous and flexible chain conveyers 76 carried by opposite beams 68.

GB 2136761 A discloses a device for placing a tubular sheath around round-cylindrical bales. The device 1 comprises a tunnel structure 2 mounted on two skids 3, cf. Fig. 1 and Fig. 2. The device 1 sheathes a row of large round bales, cf. Fig. 3 and p. 2/l.111ff.

A tubular sheath 4 is bunched up on the outside of the tunnel structure 2. A tractor 13 advances in the direction of the arrow A. Blades 10 engage a bale B and raise the bale up towards an entry mouth 6 defined by rim 5, cf. Fig. 5.

US 4945715 discloses a device which inserts round bales into tubes or bags. A frame 12 of this bagging apparatus 10 comprises a pair of spaced side rails 24 each carrying two wheels 14. The bagging section at the rear of the frame 12 comprises large octagonal hoop 58 secured by angled struts 60. A flexible tube support 62 is connected to the hoop 58. A serious of sleeves 68 mounted at the bag end of the tube support 62 carry a circumferential hoop 70 which substance the rear end of the tube support 62.

GB 2394932 A discloses a machine for wrapping square (cuboid) bales. On a chassis 3 an orbital type film distribution mechanism 5 is mounted. Several hooks 16 penetrate the bottom of a bale 18 on the ground and secure them on a feed conveyer 8. The feed conveyer 8 moves the bale 18 to be wrapped through the orbital wrapping device 5 and further on a discharge conveyer 9. Film 6 is wrapped around the bale. A discharge conveyer 9 tilts down and deposits the wrapped bale on the ground.

A continuing need exists for apparatus for gathering and wrapping bales. A continuing need also exists for an apparatus that allows bales to be wrapped and unloaded in modules which may subsequently be reloaded for further transport and use.

This section is intended to introduce the reader to various aspects of art that may be related to various aspects of the disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### SUMMARY

One aspect of the present disclosure is directed to an apparatus for gathering and wrapping bales resting on a surface. The apparatus includes a first bed assembly for supporting and conveying bales, a loading assembly for lifting a bale from the surface and conveying it to the first bed assembly, a second bed assembly for conveying bales and a bale wrapping device for wrapping bales. The loading assembly is pivotal relative to the first bed assembly. The second bed assembly is pivotal relative to the first bed assembly. The bale wrapping device is mounted to the second bed assembly. The second bed assembly comprises two generally parallel conveyors for moving bales towards the bale wrapping device.

Another aspect of the present disclosure is directed to a method for gathering and wrapping bales resting on a surface. Bales are loaded from the surface onto an apparatus for gathering and wrapping bales. The bales form a module of at least two bales on the apparatus. The module of bales is wrapped. A wrapped module of bales is unloaded onto the surface at a storage site. The module of bales is reloaded onto the apparatus at the storage site. The apparatus and module of bales is transferred to a second site. The module of bales is unloaded onto the surface at the second site.

A further aspect of the present disclosure is directed to a method for gathering and wrapping bales resting on a surface. A bale is loaded on an apparatus for gathering and wrapping bales. The bale is transferred from a loading assembly (15) to a first bed assembly and later to a second bed assembly. The bale on the second bed assembly is wrapped. The bale is unloaded onto the surface. The
loading, wrapping and unloading steps occur along a common lengthwise central axis.

Yet another aspect of the present application is directed to a method for wrapping a substantially continuous row of bales resting on a surface. Bales are loaded in the row from the surface onto an apparatus for wrapping bales. The loaded bales are wrapped as the apparatus continues to load additional bales. The wrapped bales are unloaded as the apparatus continues to load additional bales.

Various refinements exist of the features noted in relation to the above-mentioned aspects of the present disclosure. Further features may also be incorporated in the above-mentioned aspects of the present disclosure as well. These refinements and additional features may exist individually or in any combination. For instance, various features discussed below in relation to any of the illustrated embodiments of the present disclosure may be incorporated into any of the above-described aspects of the present disclosure, alone or in any combination, without departing from the scope of the invention as defined by the appended claims.

### BRIEF DESCRIPTION OF THE DRAWINGS

Figure 1 is a perspective view of an apparatus for gathering bales;
Figure 2 is a perspective view of the apparatus prior to loading a round bale;
Figure 3 is a top view of the apparatus;
Figure 4 is a perspective view of a portion of cylinders used for tilting the apparatus;
Figure 5 is a perspective view of the apparatus after the round bale has been loaded onto the bed;
Figure 6 is a perspective view of the apparatus after being loaded with bales;

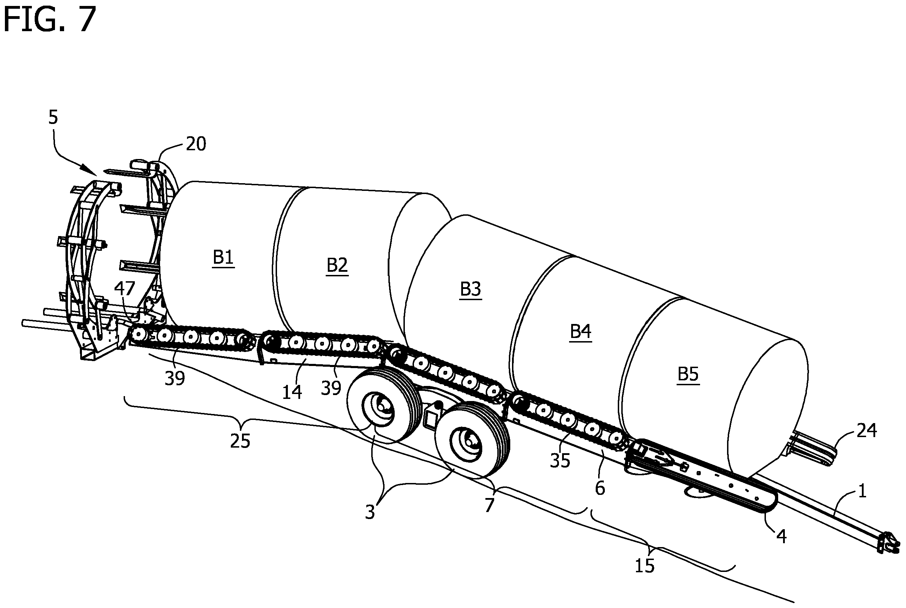

Figure 7 is a perspective view of the apparatus prepared for unloading of bales;

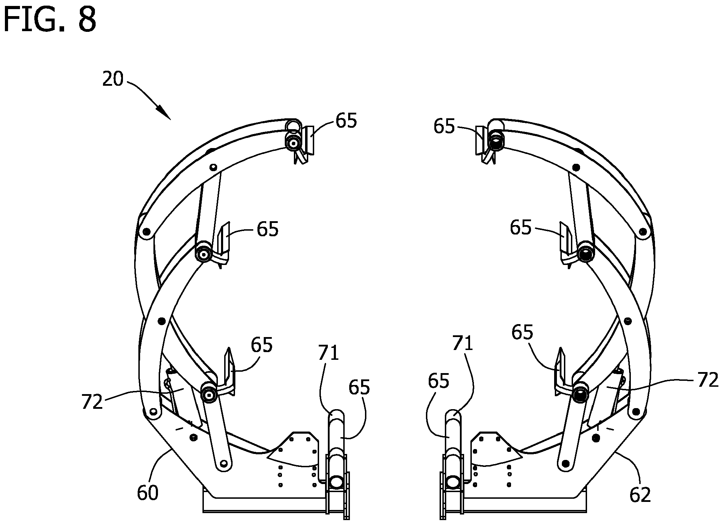

Figure 8 is a perspective view of a bale wrapping device;

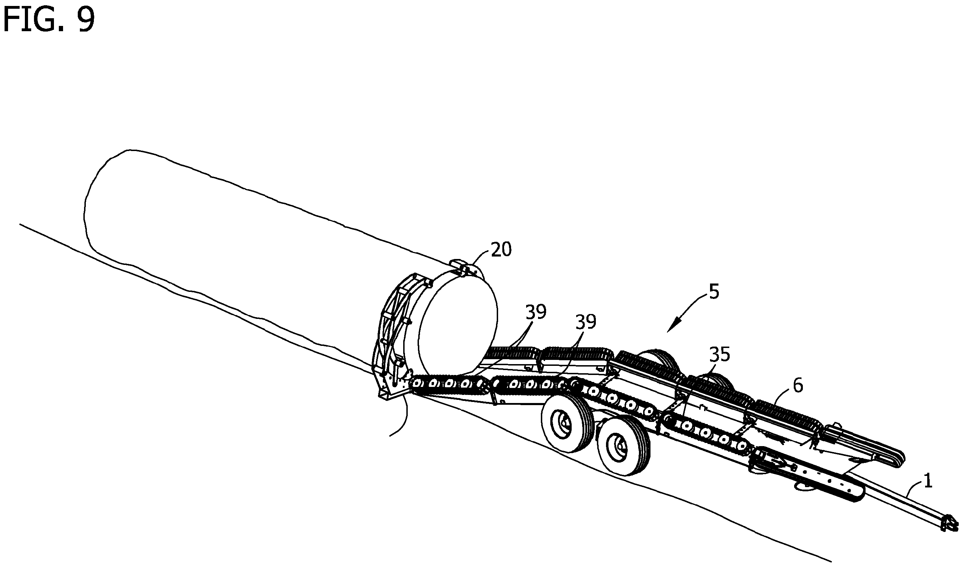

Figure 9 is a perspective view of the apparatus during unloading and wrapping of bales; and

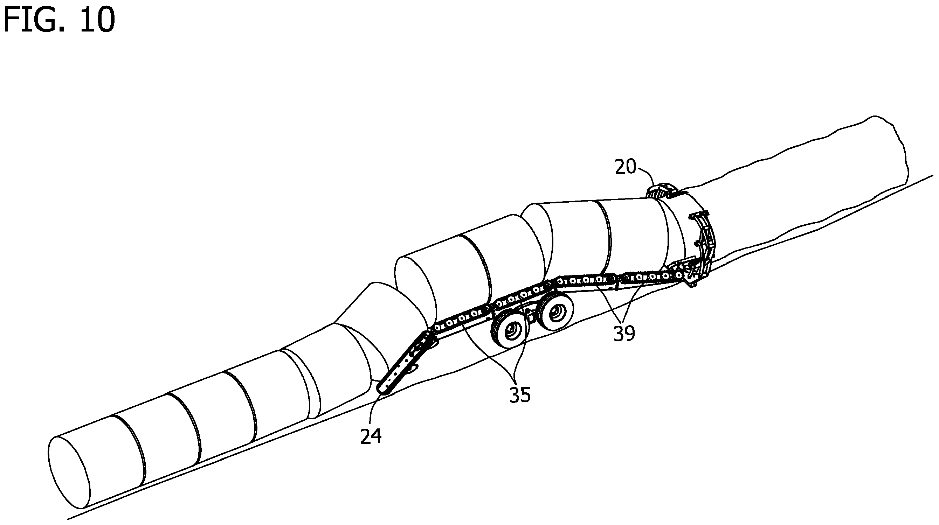

Figure 10 is a perspective view of the apparatus during unloading and wrapping of a prearranged row of bales.

Corresponding reference characters indicate corresponding parts throughout the drawings.

### DETAILED DESCRIPTION

An embodiment of an apparatus for gathering bales is generally referred to as 5 in Figure 1. The apparatus 5 includes a first bed assembly 7 for supporting and conveying bales and a loading assembly 15 for lifting a bale from the surface and conveying it to the first bed assembly. The apparatus 5 also includes a second bed assembly 25 for conveying one or more bales (e.g., a "module" of bales) through a bale wrapping device 20 and for unloading the bales on a surface.

The apparatus 5 includes a tongue 1 for pulling the apparatus by use of, for example, a tractor or other pulling vehicle. In some embodiments (not shown) the apparatus 5 includes its own propulsion mechanism rather than being pulled by a pulling vehicle.

The apparatus 5 includes wheels 3. The two wheels 3 on each side of the apparatus 5 are connected by a tandem axle 19 by use of hub and spindle assemblies (not shown). The tandem axles 19 are connected by a frame member 21 (Fig. 2). The first bed assembly chassis 6 and second bed assembly chassis 14 are pivotally connected to the frame member 21. This arrangement allows the first bed assembly 7 and second bed assembly 25 to be tilted between various positions as explained further below. Tracks (not shown) may be used as an alternative to the wheels 3.

The loading assembly 15 includes two arms 4, 24 that are the first portion of the apparatus 5 to contact the bale during loading. Each arm 4, 24 includes an endless conveyor belt 16, 18. The endless conveyor belts 16, 18 may include various drive, idler and/or support rollers (not shown) for rotating the conveyor belt. In some cases the drive roller is positioned at the front, and in some cases at the rear.

Each belt 16, 18 includes upper portions 16u, 18u (Fig. 1) that are capable of carrying the weight of a bale. The movement of the belt, around the front roller and backward along the upper portion of the belt path, is effective to lift a bale off the ground and simultaneously cause the bale to move toward the first bed assembly 7. This lifting and transporting action occurs after the two conveyor belts contact the bale B1 (Fig. 2).

The surface characteristics of the conveyors 16, 18 may affect the frictional engagement between the conveyor belt and the bale. The conveyor belts 16, 18 may include a surface that will adequately engage the bale to enhance the capability for the loading assembly to reliably lift the bales while also minimizing potential for damage to the bale and any bale wrapping.

The arms 4, 24 are each independently pivotally attached to the chassis 6 of the first bed assembly 7. The arms 4, 24 may be attached by use of a pivot pin (not shown) or by any other suitable method which allows the arms 4, 24 to pivot relative to the chassis 6. Each side of the chassis 6 includes a stop (not shown) which limits the downward pivot of the arms 4, 24 relative to the chassis.

The apparatus 5 has a loading end 50, discharge end 47 and a central lengthwise axis A (Fig. 3) that extends through the loading end and discharge end. As shown in Figure 3, the first arm 4 and second arm 24 are substantially parallel to the lengthwise axis A. The first arm 4 and second arm 24 may form an angle with the axis A such that the arms open toward the bale as the apparatus 5 approaches the bale.

The first bed assembly 7 has a first end 32 and a second end 27 and includes two generally parallel bed conveyors 35 (Fig. 1) on each side of the apparatus 5. The first bed assembly 7 includes a chassis 6 to which the bed conveyors 35 are mounted. Each bed conveyor 35 includes an endless belt routed around a front idler roller and a rear powered roller that may be rotated to cause the belt to move which results in moving bales away from the loading assembly 15 and toward the second end 27 of the first bed assembly 7. Each conveyor 35 may have a length (i.e., the distance between the idler roller and the drive roller) that is about the length of one bale. Typical bale lengths for forage and silage products are between about 101,6 cm and 152,4 cm (forty and sixty inches), but the apparatus may be constructed to handle bales of any size, e.g., bales that are in excess of 152,4 cm ( sixty inches) in length (e.g., cotton bales which are in the range of 254 cm (100 inches) in length).

The first bed assembly 7 may have one bed conveyor (not shown) on each side that extends from the first end 32 to the second end 27 of the bed assembly rather than multiple bed conveyors on each side. In some embodiments, the first bed assembly 7 has a single conveyor belt (not shown) that forms a floor upon which the bales rest for moving bales toward the second end 27.

The second bed assembly 25 also includes two generally parallel bed conveyors 39 on each side of the apparatus 5 and a chassis 14 to which the bed conveyors are mounted. Similar to the bed conveyors 35 of the first bed assembly 7, each bed conveyor 39 of the second bed assembly 25 includes an endless belt routed around a front idler roller and a rear powered roller. The conveyors 39 may be rotated to cause the bales to move toward the bale wrapping device 20 and for unloading bales as explained further below.

The bale wrapping device 20 is mounted on the second bed assembly 25 at the second end 47 of the assembly 25. In other embodiments, the bale wrapping device 20 is mounted to the second bed assembly 25 at points other than the second end 47 (i.e., nearer or at the first end 29) or may even be mounted to the first bed assembly 7.

The conveyor belts 16, 18 of the first and second arms 4, 24 of the loading assembly 15 may be driven by hydraulics, by a power-take-off system or by an electrical drive. Similarly, the first bed assembly conveyor belts 35 and second bed assembly conveyor belts 39 may be driven by hydraulics, a power-take-off system or an electric drive. The position of the loading apparatus 5 relative to the pull vehicle (i.e., whether the apparatus is pulled directly behind the pull vehicle or at an offset position such as when bales are being gathered from the field) may be adjusted by manipulating the angle between the tongue 1 and the axis A (Fig. 3) of the apparatus by use of hydraulics or by any other method suitable to those of skill in the art.

The bed conveyors 35, 39 could be constructed from the same basic components used in the loading assembly conveyors 16, 18, with an endless conveyor belt, an idler roller, a drive roller and supports. The embodiments illustrated herein show an alternative construction for the bed conveyors 35, 39 each including an endless conveyor belt of a slightly different construction than the belts 16 and 18, routed around a drive pulley and an idler pulley. In some cases the drive roller of each bed conveyor 35, 39 is positioned at the front, and in some cases at the rear.

It should be noted that any suitable type of conveyer belts or conveyor systems may be included in the apparatus 5. For instance, a conveyor belt composed of nylon or fiberglass fibers covered by materials such as rubber, PVC, thermoplastic polymer or the equivalent may be used. Chain conveyor systems may also be used without departing from the scope of the present disclosure. In this regard, "conveyor belt" as used herein includes any arrangement in which a belt, chain, track or the like is moved around a series of pulleys to cause movement of the belt, chain or track.

The first bed assembly 7 may be pivoted relative to the loading assembly 15 and/or the second bed assembly 25 by use of cylinder 17 (Fig. 4) attached to the chassis 6 of the first bed assembly 7 and the frame member 21. The cylinder 17 may be actuated by use of pressurized fluidized oil (i.e., may be hydraulically actuated) or by any other method available to those of skill in the art. The cylinder 17 may be controlled manually or automatically.

During loading of bales, the cylinder 17 may be actuated to cause the arms 4, 24 (Fig. 1) to contact the bale surface and pivot away from the stop of the chassis 6. At this position, the arms 4, 24 may freely pivot and move upward and downward with the contour of the bale surface (i.e., appear to "float" on the surface).

The second bed assembly 25 may pivot relative to the first bed assembly 7. A cylinder 37 (Fig. 4) may be attached to the chassis 14 of the second bed assembly 7 and the frame member 21. The cylinder 37 may be actuated to lower the second end 47 (also referred to herein as the "discharge end" of the apparatus 5) of the second bed assembly 25 toward the unloading surface for unloading of bales.

Referring now to Figure 3, the loading assembly 15 has a first end 50 (also referred to herein as the "loading end" of the apparatus 5), second end 57 and a central axis A₁ that extends through the first and second ends of the loading assembly. The first bed assembly 7 has a first end 32 and a second end 27 and has a lengthwise central axis A₂ that extends through the first and second ends of the first bed assembly. The second bed assembly 25 has a first end 29, second end 47 and has a lengthwise central axis A₃ that extends through the first and second ends of the second bed assembly. As shown in Figure 3, the loading assembly 15, first bed assembly 7, and second bed assembly 25 share a common lengthwise central axis A (i.e., the loading assembly, first bed assembly, and second bed assembly are aligned during pick-up, transport, wrapping and unloading of bales).

In operation, the apparatus 5 is pulled by the pull vehicle (not shown) with the loading assembly in a loading position toward a bale as shown in Figure 2. The vehicle may provide the power for running the various conveyors and positioning systems (e.g., by use of hydraulics) or the apparatus 5 may include its own dedicated power system (e.g., hydraulic system). The apparatus described herein uses a hydraulic system, but other power transfer technologies, such as an electrical system may be used.

Generally, the apparatus 5 is suitable for picking up cylindrical bales commonly referred to as "round" bales. Round bales are used for harvesting any material capable of being formed into a cylindrical bale such as silage or traditional hay crops (e.g., alfalfa or grass), corn stover or other crop residues, cotton, or woody products like small diameter trees. The round bales may have a variety of sizes typically ranging from 101,6 cm to 254 cm ( forty to one hundred inches) in diameter and 101,6 cm to 254 cm ( forty to one hundred inches) in length. While the apparatus 5 is shown in Figures 1-10 as loading round bales, it should be noted that the apparatus may be adapted to pick up large square bales or even small square bales without limitation.

The apparatus 5 shown in Figures 1-10 is configured for loading up to 5 bales. The apparatus 5 may be modified to carry more or less bales without departing from the scope of the present disclosure.

As shown in Figure 2, the bale B1 should be oriented such that the ends 40 of the cylindrical bale are perpendicular to the apparatus 5 as the apparatus approaches the bale B1.

The chassis 6 and tongue 1 are caused to be at an angle λ relative to one another such that the loading assembly 15, first bed assembly 7 and second bed assembly 25 travel outside of the path of the pull vehicle (not shown) to allow the pull vehicle to travel to the outside of bales targeted for loading.

The first and second conveyor belts 16, 18 are caused to move by rotating the drive rollers while the apparatus 5 travels toward the bale B1. As the apparatus 5 approaches the bale B1, the conveyor belts 16, 18 of the arms 4, 24 contact the bale causing the bale to be lifted and simultaneously moved toward the first bed assembly 7. The bale B1 may be loaded onto the loading assembly 15 (and subsequently onto the first bed assembly 7, second bed assembly 25 and through the wrapping device 20) without stopping the apparatus 5 such that the apparatus 5 and the vehicle which pulls the apparatus may continually move forward during bale pick-up.

Once the bale is loaded on the loading assembly 15, the belt conveyors 35 of the first bed assembly 7 move to transfer the bale B1 from the loading assembly 15 to the position on the first bed assembly illustrated in Figure 5. Once loaded onto the first bed assembly 7, the conveyors 35 of the first bed assembly 7 are stopped to position the first bale adjacent the end of the loading assembly 15.

Once the first bale B1 is loaded, the apparatus 5 is directed to a second bale. The loading assembly 15 lifts the second bale and carries the second bale toward the bed assembly 7 until it nears or contacts the first bale. Upon nearing or contacting the first bale, one or more sets of bed conveyors 35 of the first bed assembly 7 are caused to rotate and the first and second bales travel partially down the first bed assembly 7 toward the second end 27.

Bales may continue to be loaded onto the apparatus 5 by operation of conveyors of the loading assembly 15, first bed assembly 7 and second bed assembly 25 until the apparatus becomes fully loaded (Fig. 6). Once fully loaded, the apparatus 5 may be adjusted to promote ease of travel to the unloading site. As shown in Figure 5, the chassis 6 of the apparatus 5 may be leveled by use of hydraulic cylinder 17 (Fig. 4) and the relative position between tongue 1 and the bed 7 may be adjusted (e.g., the tongue may be adjusted to be more parallel to the bed).

As shown in Figure 7, once the apparatus 5 is pulled to the desired unloading site for the bales, the second cylinder 37 (Fig. 4) is actuated to pivot the second bed assembly 25 downward relative to the first bed assembly 7. The bales loaded on the apparatus (which may be referred to herein as a "module" of bales) are conveyed through the bale wrapping device 20 by operating one or more of the loading assembly conveyors 16, 18, first bed assembly conveyors 35 and second assembly conveyors 39. While being wrapped, the module of bales is unloaded onto the storage surface.

Referring now to Figure 8, the wrapping device 20 includes a first arm 60 and second arm 62. Each arm 60, 62 includes a number of attachment members 65. Wrapping material is fitted on the attachment members 65 such that the attachment members are within the inner space formed by the material. Prior to passing bales through the device 20, cylinders 72 (e.g., hydraulic cylinders) are actuated to radially extend the position of the attachment members 65 thereby securing the wrapping material. Any suitable wrapping material may be used such as commercially available LASTIC TUBE wrapping from AT Films (Edmonton, Canada).

During wrapping, the wrapping device 20 is maintained with an inner radius greater than the radius of the bales to allow bales to pass through the wrapping device. The bales are conveyed to the discharge end 47 (Fig. 7) of the apparatus 5 causing the first bale B1 to contact a sealed end of the wrapping material. As bales continue to be conveyed through the wrapping device 20, further wrapping material is released. As the wrapping material is released, the wrapping material shrinks to the radius of the bales (Fig. 9). The wrapping device 20 may include transfer elements for assisting in transferring the bales to the target resting surface such as rollers or tube members 71 as shown in Figure 8.

After the last bale of the module has passed through the wrapping device 20, the wrapping material is cut and sealed to form a wrapped module. As the bales are wrapped, the wrapped module is transferred to a support surface (Fig. 9).

It should be noted that the methods of the present disclosure for gathering and wrapping bales are not limited to any particular pivot position between (1) the loading assembly 15 and the first bed assembly 7 and (2) the second bed assembly 25 and the first bed assembly 7 during loading, transport, wrapping and/or unloading of bales. If desired, bales may be unloaded to the front of the apparatus 5 without wrapping by tilting the loading assembly 15 to a forward tilted position and causing the apparatus 5 to move backward.

In some embodiments, the apparatus is not adjusted to a traveling position after bales are loaded. In such embodiments, the last bale is loaded and the module of bales is wrapped and unloaded without adjusting the relative position of the loading assembly 15, first bed assembly 7 or second bed assembly 25 (i.e., the second bed assembly 25 is maintained at a pivot position in which second end 47 is positioned near or at the unloading surface).

As shown in Figure 10, the loading assembly 15, first bed assembly 7 and second bed assembly 25 may be maintained at a constant position while wrapping a substantially continuous prearranged row of bales. In accordance with such embodiments, bales from the row are loaded from the bale surface onto the apparatus 5 while propelling the apparatus forward. As bales are continuously loaded on the apparatus 5, they are continuously wrapped by use of wrapping device 20 and are continuously unloaded from the second bed assembly 25. In this manner, bales may be unloaded to the surface at substantially the same point at which they were loaded.

As noted above, the apparatus 5 of embodiments of the present disclosure may be used to prepare wrapped modules of at least two bales for further use. The apparatus 5 as shown in Figures 1-10 may be used to build and wrap a module of up to 5 bales by gathering bales on the second bed assembly 25, first bed assembly 7 and loading assembly 15. The module of bales may include more or less bales such as at least about 2 bales, at least about 3 bales, at least about 4 bales, at least about 5 bales, at least about 6 bales, from about 2 to about 15 bales, from about 2 to about 10 bales or from about 3 bales to about 10 bales. In some embodiments, the number of bales is the daily quantity of forage material that is fed at a feedlot site.

After the bales have been loaded from the bale surface onto the apparatus 5, the module of bales may be concurrently wrapped and unloaded (e.g. onto the surface at a storage site). When transport of the module is subsequently desired, the module may be reloaded on the apparatus (either as wrapped or after unwrapping the module) at the storage site and the apparatus and module of bales may be transported to a second site (e.g., a site at which the bales are consumed). The module (either wrapped or unwrapped) may then be unloaded onto the surface at the second site.

It should be noted that the module of bales may be reloaded onto the apparatus 5 by propelling the apparatus 5 forward and loading onto the loading assembly 15 or the module may be loaded by moving the apparatus backward and loading onto the second bed assembly 25 (e.g., after removing the bale wrapping device 20 from the apparatus). After being reloaded, the module may be unloaded from either the loading assembly 15 or the second bed assembly 25 onto the surface at the second site (e.g., the site at which the bales are consumed).

Modules of wrapped bales may be prepared by use of the apparatus 5 by loading a first bale B1 from the bale surface onto the loading assembly 15. The first bale B1 is transferred from the loading assembly 15 to the first bed assembly 7 by use of conveyor belts 16, 18. A second bale B2 is loaded from the surface on which it rests onto the loading assembly 15 and the second bale B2 is transferred from the loading assembly 15 to the first bed assembly 7. Additional bales may be loaded to form a larger module. Bales are transferred from the first bed assembly 7 to the second bed assembly 25 and conveyed through the wrapping device 20. The wrapped module of bales is unloaded onto the surface at a storage site.

Compared to conventional apparatus for gathering and wrapping bales, the apparatus described above has several advantages. The apparatus may allow loading, wrapping and unloading of bales to occur along a common lengthwise central axis thereby minimizing bale movement to allow for reliable bale transport and wrapping (e.g., minimized air inclusion) to be achieved. The apparatus may include two pivot points which allows bales to be loaded from the bale surface, wrapped and unloaded back to the surface by conveyor action. Modules of bales may be formed and wrapped and the modules may be unloaded, stored, reloaded and transported as desired by one operator and one machine. Use of separately controllable bale sections (e.g., loading assembly 15, first bed assembly 7 and/or second bed assembly 25) allows bales to be wrapped more closely together relative to the spacing before bale loading. A substantially continuous prearranged row of bales resting on a surface may be wrapped by use of the apparatus.

As used herein, the terms "about," "substantially" and "approximately" when used in conjunction with ranges of dimensions, concentrations, temperatures or other physical or chemical properties or characteristics is meant to cover variations that may exist in the upper and/or lower limits of the ranges of the properties or characteristics, including, for example, variations resulting from rounding, measurement methodology or other statistical variation.

When introducing elements of the present disclosure or the embodiment(s) thereof, the articles "a", "an", "the" and "said" are intended to mean that there are one or more of the elements. The terms "comprising," "including," "containing" and "having" are intended to be inclusive and mean that there may be additional elements other than the listed elements. The use of terms indicating a particular orientation (e.g., "top", "bottom", "side", etc.) is for convenience of description and does not require any particular orientation of the item described.

As various changes could be made in the above constructions and methods without departing from the scope of the disclosure, it is intended that all matter contained in the above description and shown in the accompanying drawing[s] shall be interpreted as illustrative and not in a limiting sense.

## Claims

1. An apparatus (5) for gathering and wrapping bales (B1, B2,) resting on a surface, the apparatus (5) comprising:
- a first bed assembly (7) for supporting and conveying bales (B1, B2,);
- a loading assembly (15) for lifting a bale from the surface and conveying it to the first bed assembly (7), the loading assembly (15) being pivotal relative to the first bed assembly (7);
- a second bed assembly (25) for conveying bales (B1, B2,), the second bed assembly (25) being pivotal relative to the first bed assembly (7);
**characterized in that** the apparatus (5) further comprises a bale wrapping device (20) mounted to the second bed assembly (25) for wrapping bales (B1, B2,),
wherein the second bed assembly (25) comprises two generally parallel conveyors (39) for moving bales (B1, B2,) towards the bale wrapping device (20).

2. The apparatus (5) as set forth in claim 1 wherein the loading assembly (15) comprises:
- a first arm (4) comprising a first conveyor belt (16); and
- a second arm (24) comprising a second conveyor belt (18).

3. The apparatus (5) as set forth in claim 2 wherein the apparatus (5) comprises a loading end (50), a discharge end (47) and a lengthwise axis (A) that extends through the loading end and discharge end, the first arm (4) and the second arm (24) being substantially parallel to the lengthwise axis (A).

4. The apparatus (5) as set forth in claim 2 or claim 3 wherein each arm (4, 24) is independently pivotally attached to the first bed assembly (7).

5. The apparatus (5) as set forth in any one of claims 1 to 4 wherein the first bed assembly (7) comprises two generally parallel conveyors (35).

6. The apparatus (5) as set forth in any one of claims 1 to 5 wherein the loading assembly (15), first bed assembly (7), and second bed assembly (25) each have a common lengthwise central axis (A).

7. The apparatus (5) as set forth in any one of claims 1 to 6 wherein the second bed assembly (25) is pivotally attached to the first bed assembly (7).

8. A method for gathering and wrapping bales (B1, B2,) resting on a surface, the method comprising:
- loading bales (B1, B2,) from the surface onto an apparatus (5) for gathering and wrapping bales, the bales (B1, B2,) forming a module of at least two bales on the apparatus (5);
- wrapping the module of bales (B1, B2,);
- unloading a wrapped module of bales (B1, B2,) onto the surface at a storage site;
- reloading the module of bales (B1, B2,) onto the apparatus (5) at the storage site;
- transferring the apparatus (5) and module of bales (B1, B2,) to a second site; and
- unloading the module of bales (B1, B2,) onto the surface at the second site.

9. The method as set forth in claim 8 wherein the module comprises at least 3 bales.

10. The method as set forth in claim 8 or claim 9 wherein the apparatus (5) comprises a first bed assembly (7) for supporting and conveying a module of bales (B1, B2,); a loading assembly (15) for lifting a bale (B1) from the surface and conveying it to the first bed assembly, the loading assembly (15) being pivotally attached to the first bed assembly (7); a second bed assembly (25) for conveying bales (B1, B2,), the second bed assembly (25) being pivotally attached to the first bed assembly; and a bale wrapping device (20) mounted to the second bed assembly (25) for wrapping bales (B1, B2,), the method comprising:
- loading a first bale (B1) from the surface onto the loading assembly (15);
- transferring the first bale (B1) from loading assembly (15) to the first bed assembly;
- loading a second bale (B2) from the surface onto the loading assembly (15);
- transferring the second bale (B2) from the loading assembly (15) to the first bed assembly (7), at least the first bale (B1) and second bale (B2) forming a module;
- transferring bales (B1, B2,) to the second bed assembly (25) and through the bale wrapping device (20) to wrap the module; and
- unloading the wrapped module of bales (B1, B2,) onto the surface at a storage site.

11. The method as set forth in claim 10 further comprising:
- reloading the module of bales (B1, B2,) from the surface at the storage site onto (1) the loading assembly (15) or (2) the second bed assembly (25);
- transferring bales (B1, B2,) to the first bed assembly (7); and
- unloading the module of bales from (1) the loading assembly (15) or (2) the second bed assembly (25) onto the surface at the second site.

12. The method as set forth in claim 10 or claim 11 wherein the loading assembly (15) comprises a first arm (4) comprising a first conveyor belt (16) and a second arm (24) comprising a second conveyor belt (18); the first bed assembly (7) comprising two generally parallel conveyors (35) and the second bed assembly (25) comprising two generally parallel conveyors (39).

13. The method as set forth in any one of claims 10 to 12 wherein the loading assembly (15), first bed assembly (7), and second bed assembly (25) each have a common lengthwise central axis (A).

14. The method as set forth in any one of claims 10 to 13 further comprising automatically sealing the wrapping material before or while unloading the wrapped module of bales (B1, B2,) onto the surface.

15. The method as set forth in any one of claims 10 to 14 wherein the bales (B1, B2,) are silage bales.

16. The method as set forth in any one of claims 10 to 15 wherein the module of bales (B1, B2,) are wrapped and the wrapped module of bales (B1, B2,) are unloaded onto the surface concurrently.

17. The method as set forth in any one of claims 10 to 16 wherein the module of bales (B1, B2,) is wrapped while being loaded, while being transferred to a second site and/or while being unloaded.

18. The method as set forth in any one of claims 10 to 17 further comprising unwrapping the bales (B1, B2,) prior to the bales (B1, B2,) being reloaded, being transferred to a second site and/or being unloaded.

19. A method for gathering and wrapping bales (B1, B2,) resting on a surface, the method comprising:
providing an apparatus (5) for gathering and wrapping bales;
- wherein the apparatus (5) comprises a first bed assembly (7) for supporting and conveying a bale (B1, B2,); a loading assembly (15) for lifting a bale (B1, B2,) from the surface and conveying it to the first bed assembly (7), the loading assembly (15) being pivotally attached to the first bed assembly (7); a second bed assembly (25) for conveying bales (B1, B2,), the second bed assembly (25) being pivotally attached to the first bed assembly (7); and a bale wrapping device (20) mounted to the second bed assembly (25) for wrapping bales (B1, B2,),
- loading a bale (B1, B2,) from the surface onto the loading assembly (15) of the apparatus (5);
- transferring the bale (B1, B2,) from the loading assembly (15) to the first bed assembly (7);
- transferring the bale (B1, B2,) to the second bed assembly (25) and wrapping the bale (B1, B2,); and
- unloading the bale (B1, B2,) onto the surface, wherein the loading, wrapping and unloading steps occur along a common lengthwise central axis (A).

20. The method as set forth in claim 19 wherein the loading assembly (15), first bed assembly (7), and second bed assembly (25) each have a common lengthwise central axis (A).

21. The method as set forth in any one of claims 19 to 20 wherein the loading assembly comprises a first arm (4) comprising a first conveyor belt (16) and a second arm (24) comprising a second conveyor belt (18); the first bed assembly (7) comprises two generally parallel conveyors (35) and the second bed assembly (25) comprises two generally parallel conveyors (39).

22. The method as set forth in any one of claims 19 to 21 wherein the bale (B1, B2,) is concurrently wrapped and unloaded onto the surface.

23. A method for wrapping a substantially continuous row of bales (B1, B2,) resting on a surface, the method comprising:
- providing an apparatus (5) for gathering and wrapping bales;
- wherein the apparatus (5) comprises a first bed assembly (7) for supporting and conveying a bale (B1, B2,); a loading assembly (15) for lifting a bale (B1, B2,) from the surface and conveying it to the first bed assembly (7), the loading assembly (15) being pivotally attached to the first bed assembly (7); a second bed assembly (25) for conveying bales (B1, B2,), the second bed assembly (25) being pivotally attached to the first bed assembly (7); and a bale wrapping device (20) mounted to the second bed assembly (25) for wrapping bales (B1, B2,),
- loading bales (B1, B2,) in the row from the surface onto the loading assembly (15) of the apparatus (5) for wrapping bales;
- transferring the bales (B1, B2,) from the loading assembly (15) to the first bed assembly (7);
- transferring the bales (B1, B2,) to the second bed assembly (25) and wrapping the loaded bales (B1, B2,) as the apparatus (5) continues to load additional bales (B3, B4,); and
- unloading the wrapped bales (B1, B2,) as the apparatus (5) continues to load additional bales (B3, B4,).

24. The method as set forth in claim 23 wherein the bales (B1, B2,) are unloaded to the surface at substantially the same point at which they were loaded.

## Patentansprüche

1. Vorrichtung (5) zum Aufsammeln und Verpacken von Ballen (B1, B2,), die auf einer Fläche liegen, wobei die Vorrichtung (5) aufweist:
- eine erste Lagerflächenanordnung (7) zum Tragen und Befördern von Ballen (B1, B2,);
- eine Ladeanordnung (15) zum Anheben eines Ballens von der Oberfläche und zum Befördern zu der ersten Lagerflächenanordnung (7), wobei die Ladeanordnung (15) in Bezug auf die erste Lagerflächenanordnung (7) schwenkbar ist;
- eine zweite Lagerflächenanordnung (25) zum Befördern von Ballen (B1, B2,), wobei die zweite Lagerflächenanordnung (25) in Bezug auf die erste Lagerflächenanordnung (7) schwenkbar ist;
**dadurch gekennzeichnet, dass** die Vorrichtung (5) ferner eine Ballenverpackungseinrichtung (20) aufweist, die an der zweiten Lagerflächenanordnung (25) zum Verpacken von Ballen (B1, B2, ) befestigt ist, wobei die zweite Lagerflächenanordnung (25) zwei im allgemeinen parallele Transporteinheiten (39) zum Verschieben der Ballen (B1, B2,) in Richtung zu Ballenverpackungseinrichtung (20) aufweist.

2. Vorrichtung (5) nach Anspruch 1, wobei die Ladeanordnung (15) aufweist:
- einen ersten Ausleger (4) mit einem ersten Förderband (16); und
- einen zweiten Ausleger (24) mit einem zweiten Förderband (18).

3. Vorrichtung (5) nach Anspruch 2, wobei die Vorrichtung (5) ein Ende zum Aufladen (50), ein Ende zum Abladen (47) und eine Längsachse (A) aufweist, die durch das Ende zum Aufladen und das Ende zum Abladen verläuft, wobei der erste Ausleger (4) und der zweite Ausleger (24) im Wesentlichen parallel zu der Längsachse (A) sind.

4. Vorrichtung (5) nach Anspruch 2 oder Anspruch 3, wobei jeder Ausleger (4, 24) unabhängig schwenkbar an der ersten Lagerflächenanordnung (7) angebracht ist.

5. Vorrichtung (5) nach einem der Ansprüche 1 bis 4, wobei die erste Lagerflächenanordnung (7) zwei im Wesentlichen parallele Transporteinheiten (35) aufweist.

6. Vorrichtung (5) nach einem der Ansprüche 1 bis 5, wobei die Ladeanordnung (15), die erste Lagerflächenanordnung (7) und die zweite Ladeflächenanordnung (5) jeweils eine gemeinsame zentrale Längsachse (A) haben.

7. Vorrichtung (5) nach einem der Ansprüche 1 bis 6, wobei die zweite Lagerflächenanordnung (5) schwenkbar an der ersten Lagerflächenanordnung (7) befestigt ist.

8. Verfahren zum Aufsammeln und Verpacken von Ballen (B1, B2,), die auf einer Fläche liegen, wobei das Verfahren umfasst:
- Aufladen von Ballen (B1, B2,) von der Fläche auf eine Vorrichtung (5) zum Aufsammeln und Verpacken von Ballen, wobei die Ballen (B1, B2,) ein Modul aus mindestens zwei Ballen auf der Vorrichtung (5) bilden;
- Verpacken des Moduls aus Ballen (B1, B2,);
- Abladen eines verpackten Moduls aus Ballen (B1, B2,) auf die Fläche an einem Lagerplatz;
- erneutes Aufladen des Moduls aus Ballen (B1, B2,) auf die Vorrichtung (5) an dem Lagerplatz;
- Überführen der Vorrichtung (5) und eines Moduls aus Ballen (B1, B2,) zu einem zweiten Platz; und
- Abladen des Moduls aus Ballen (B1, B2,) auf die Fläche an dem zweiten Platz.

9. Verfahren nach Anspruch 8, wobei das Modul mindestens 3 Ballen enthält.

10. Verfahren nach Anspruch 8 oder Anspruch 9, wobei die Vorrichtung (5) aufweist: eine erste Lagerflächenanordnung (7) zum Tragen und Befördern eines Moduls aus Ballen (B1, B2,); eine Ladeanordnung (15) zum Anheben eines Ballens (B1) von der Oberfläche und zum Befördern zu der ersten Lagerflächenanordnung, wobei die Ladeanordnung (15) schwenkbar an der ersten Lagerflächenanordnung (7) befestigt ist; eine zweite Lagerflächenanordnung (25) zum Befördern von Ballen (B1, B2,), wobei die zweite Lagerflächenanordnung (25) schwenkbar an der ersten Lagerflächenanordnung befestigt ist; und eine Ballenverpackungseinrichtung (20), die an der zweiten Lagerflächenanordnung (25) zum Verpacken von Ballen (B1, B2,) befestigt ist, wobei das Verfahren umfasst:
- Aufladen eines ersten Ballens (B1) von der Fläche auf die Ladeanordnung (15);
- Überführen des ersten Ballens (B1) von der Ladeanordnung (15) zu der ersten Lagerflächenanordnung;
- Aufladen eines zweiten Ballens (B2) von der Fläche auf die Ladeanordnung (15);
- Überführen des zweiten Ballens (B2) von der Ladeanordnung (15) zu der ersten Lagerflächenanordnung (7), wobei zumindest der erste Ballen (B1) und der zweite Ballen (B2) ein Modul bilden;
- Überführen von Ballen (B1, B2,) zu der zweiten Lagerflächenanordnung (25) über die Ballenverpackungseinrichtung (20), um das Modul zu verpacken; und
- Abladen des verpackten Moduls aus Ballen (B1, B2,) auf die Fläche an einem Lagerplatz.

11. Verfahren nach Anspruch 10, das ferner umfasst:
- erneutes Aufladen des Moduls aus Ballen (B1, B2,) von der Fläche an dem Lagerplatz auf (1) die Ladeanordnung (15) oder (2) die zweite Lagerflächenanordnung (25);
- Überführen von Ballen (B1, B2,) zu der ersten Lagerflächenanordnung (7); und
- Abladen des Moduls aus Ballen von (1) der Ladeanordnung (15) oder (2) der zweiten Lagerflächenanordnung (25) auf die Fläche an dem zweiten Platz.

12. Verfahren nach Anspruch 10 oder Anspruch 11, wobei die Ladeanordnung (15) einen ersten Ausleger (4) mit einem ersten Förderband (16) und einen zweiten Ausleger (24) mit einem zweiten Förderband (18) aufweist; wobei die erste Lagerflächenanordnung (7) zwei im Wesentlichen parallele Transporteinheiten (35) und die zweite Lagerflächenanordnung (25) zwei im Wesentlichen parallele Transporteinheiten (39) aufweist.

13. Verfahren nach einem der Ansprüche 10 bis 12, wobei die Ladeanordnung (15), die erste Lagerflächenanordnung (7) und die zweite Lagerflächenanordnung (25) jeweils eine gemeinsame zentrale Längsachse (A) haben.

14. Verfahren nach einem der Ansprüche 10 bis 13, das ferner umfasst: automatisches Verschließen des Verpackungsmaterials vor oder während des Abladens des verpackten Moduls aus Ballen (B1, B2,) auf die Fläche.

15. Verfahren nach einem der Ansprüche 10 bis 14, wobei die Ballen (B1, B2,) Silage-Ballen sind.

16. Verfahren nach einem der Ansprüche 10 bis 15, wobei das Modul aus Ballen (B1, B2,) verpackt wird und das verpackte Modul aus Ballen (B1, B2,) gleichzeitig auf die Fläche abgeladen wird.

17. Verfahren nach einem der Ansprüche 10 bis 16, wobei das Modul aus Ballen (B1, B2,) verpackt wird, während es aufladen wird, während es zu einem zweiten Platz überführt wird und/oder während es abgeladen wird.

18. Verfahren nach einem der Ansprüche 10 bis 17, das ferner umfasst: Entpacken der Ballen (B1, B2,), bevor die Ballen (B1, B2,) erneut aufgeladen werden, bevor sie zu einem zweiten Platz überführt werden und/oder bevor sie abgeladen werden.

19. Verfahren zum Aufsammeln und Verpacken von Ballen (B1, B2,), die auf einer Fläche liegen, wobei das Verfahren umfasst:
Bereitstellen einer Vorrichtung (5) zum Aufsammeln von Verpacken von Ballen;
- wobei die Vorrichtung (5) aufweist: eine erste Lagerflächenanordnung (7) zum Tragen und Befördern eines Ballens (B1, B2,); eine Ladeanordnung (15) zum Anheben eines Ballens (B1, B2,) von der Fläche und zum Befördern zu der ersten Lagerflächenanordnung (7), wobei die Ladeanordnung (15) schwenkbar an der ersten Lagerflächenanordnung (7) befestigt ist; eine zweite Lagerflächenanordnung (25) zum Befördern von Ballen (B1, B2,), wobei die zweite Lagerflächenanordnung (25) schwenkbar an der ersten Lagerflächenanordnung (7) befestigt ist; und eine Ballenverpackungseinrichtung (20), die an der zweiten Lagerflächenanordnung (25) zum Verpacken von Ballen (B1, B2,) befestigt ist,
- Aufladen eines Ballens (B1, B2,) von der Fläche auf die Ladeanordnung (15) der Vorrichtung (5);
- Überführen des Ballens (B1, B2,) von der Ladeanordnung (15) zu der ersten Lagerflächenanordnung (7);
- Überführen des Ballens (B1, B2,) zu der zweiten Lagerflächenanordnung (25) und Verpacken des Ballens (B1, B2,); und
- Abladen des Ballens (B1, B2,) auf die Fläche, wobei das Aufladen, das Verpacken und das Abladen entlang einer gemeinsamen zentralen Längsachse (A) erfolgen.

20. Verfahren nach Anspruch 19, wobei die Ladeanordnung (15), die erste Lagerflächenanordnung (7) und die zweite Lagerflächenanordnung (25) eine gemeinsame zentrale Längsachse (A) haben.

21. Verfahren nach Anspruch 19 oder 20, wobei die Ladeanordnung umfasst: einen ersten Ausleger (4) mit einem ersten Förderband (16) und einen zweiten Ausleger (24) mit einem zweiten Förderband (18); wobei die erste Lagerflächenanordnung (7) zwei im Wesentlichen parallele Transporteinheiten (35) und die zweite Lagerflächenanordnung (25) zwei im Wesentlichen parallele Transporteinheiten (39) aufweist.

22. Verfahren nach einem der Ansprüche 19 bis 21, wobei der Ballen (B1, B2,) gleichzeitig verpackt und auf die Fläche abgeladen wird.

23. Verfahren zum Verpacken einer im Wesentlichen kontinuierlichen Reihe aus Ballen (B1, B2, ), die auf einer Fläche liegen, wobei das Verfahren umfasst:
- Bereitstellen einer Vorrichtung (5) zum Aufsammeln und Verpacken von Ballen;
- wobei die Vorrichtung (5) aufweist: eine erste Lagerflächenanordnung (7) zum Tragen und Befördern eines Ballens (B1, B2,); eine Ladeanordnung (15) zum Anheben eines Ballens (B1, B2,) von der Fläche und zum Befördern zu der ersten Lagerflächenanordnung (7), wobei die Ladeanordnung (15) schwenkbar an der ersten Lagerflächenanordnung (7) befestigt ist; eine zweite Lagerflächenanordnung (25) zum Befördern von Ballen (B1, B2,), wobei die zweite Lagerflächenanordnung (25) schwenkbar an der ersten Lagerflächenanordnung (7) befestigt ist; und eine Ballenverpackungseinrichtung (20), die an der zweiten Lagerflächenanordnung (25) zum Verpacken von Ballen (B1, B2,) befestigt ist,
- Aufladen von Ballen (B1, B2,) aus der Reihe von der Fläche auf die Ladeanordnung (15) der Vorrichtung (5) zur Verpackung von Ballen;
- Überführen der Ballen (B1, B2,) von der Ladeanordnung (15) zu der ersten Lagerflächenanordnung (7);
- Überführen der Ballen (B1, B2,) zu der zweiten Lagerflächenanordnung (25) und Verpacken der aufgeladenen Ballen (B1, B2,), während die Vorrichtung (5) fortgesetzt weitere Ballen (B3, B4,) auflädt; und
- Abladen der verpackten Ballen (B1, B2,), während die Vorrichtung (5) fortgesetzt weitere Ballen (B3, B4,) auflädt.

24. Verfahren nach Anspruch 23, wobei die Ballen (B1, B2,) auf die Fläche im Wesentlichen an dem gleichen Punkt abgeladen werden, an welchem sie aufgeladen wurden.

## Revendications

1. Appareil (5) de collecte et d'emballage de balles (B1, B2) qui reposent sur une surface, ledit appareil (5) comprenant :
- un premier ensemble plateforme (7) permettant de supporter et de transporter des balles (B1, B2) ;
- un ensemble de chargement (15) permettant de soulever une balle (B1, B2) de la surface et de la transporter jusqu'au premier ensemble plateforme (7), ledit ensemble de chargement (15) pouvant pivoter par rapport au premier ensemble plateforme (7) ;
- un second ensemble plateforme (25) permettant de transporter les balles (B1, B2), ledit second ensemble plateforme (25) pouvant pivoter par rapport au premier ensemble plateforme (7) ;
**caractérisé en ce que** l'appareil (5) comprend en outre un dispositif d'emballage de balles (20) monté sur le second ensemble plateforme (25) afin d'emballer les balles (B1, B2),
dans lequel le second ensemble plateforme (25) comprend deux convoyeurs (39) généralement parallèles permettant de déplacer les balles (B1, B2) vers le dispositif d'emballage de balles (20).

2. Appareil (5) selon la revendication 1, dans lequel l'ensemble de chargement (15) comprend :
- un premier bras (4) comprenant une première courroie transporteuse (16) ; et
- un second bras (24) comprenant une seconde courroie transporteuse (18).

3. Appareil (5) selon la revendication 2, dans lequel l'appareil (5) comprend une extrémité de chargement (50), une extrémité de déchargement (47) et un axe longitudinal (A) qui s'étend à travers l'extrémité de chargement et l'extrémité de déchargement, le premier bras (4) et le second bras (24) étant sensiblement parallèles à l'axe longitudinal (A).

4. Appareil (5) selon la revendication 2 ou la revendication 3, dans lequel chaque bras (4, 24) est fixé indépendamment pour pivoter au premier ensemble plateforme (7) .

5. Appareil (5) selon l'une quelconque des revendications 1 à 4, dans lequel le premier ensemble plateforme (7) comprend deux convoyeurs (35) généralement parallèles.

6. Appareil (5) selon l'une quelconque des revendications 1 à 5, dans lequel l'ensemble de chargement (15), le premier ensemble plateforme (7) et le second ensemble plateforme (25) ont chacun un axe central longitudinal commun (A).

7. Appareil (5) selon l'une quelconque des revendications 1 à 6, dans lequel le second ensemble plateforme (25) est fixé pour pivoter au premier ensemble plateforme (7).

8. Procédé de collecte et d'emballage de balles (B1, B2) qui reposent sur une surface, ledit procédé comprenant :
- le chargement de balles (B1, B2), depuis la surface, sur un appareil (5) de collecte et d'emballage de balles, lesdites balles (B1, B2) formant un module d'au moins deux balles sur l'appareil (5) ;
- l'emballage du module de balles (B1, B2) ;
- le déchargement d'un module emballé de balles (B1, B2) sur la surface, au niveau d'un site de stockage ;
- le rechargement du module de balles (B1, B2) sur l'appareil (5) au niveau du site de stockage ;
- le transfert de l'appareil (5) et du module de balles (B1, B2) jusqu'à un second site ; et
- le déchargement du module de balles (B1, B2) sur la surface, au niveau du second site.

9. Procédé selon la revendication 8, dans lequel le module comprend au moins 3 balles.

10. Procédé selon la revendication 8 ou la revendication 9, dans lequel l'appareil (5) comprend un premier ensemble plateforme (7) permettant de supporter et de transporter un module de balles (B1, B2) ; un ensemble de chargement (15) permettant de soulever une balle (B1)), depuis la surface, et de la transporter jusqu'au premier ensemble plateforme, l'ensemble de chargement (15) étant fixé pour pivoter au premier ensemble plateforme (7) ; un second ensemble plateforme (25) permettant de transporter les balles (B1, B2), ledit second ensemble plateforme (25) étant fixé pour pivoter au premier ensemble plateforme ; et un dispositif d'emballage de balles (20) monté sur le second ensemble plateforme (25) afin d'emballer les balles (B1, B2), ledit procédé comprenant :
- le chargement d'une première balle (B1), depuis la surface, sur l'ensemble de chargement (15) ;
- le transfert de la première balle (B1) depuis l'ensemble de chargement (15) jusqu'au premier ensemble plateforme ;
- le chargement d'une seconde balle (B2), depuis la surface, sur l'ensemble de chargement (15) ;
- le transfert de la seconde balle (B2), depuis l'ensemble de chargement (15), jusqu'au premier ensemble plateforme (7), au moins la première balle (B1) et la seconde balle (B2) formant un module ;
- le transfert des balles (B1, B2) jusqu'au second ensemble plateforme (25) et à travers le dispositif d'emballage de balles (20) afin d'emballer le module ; et
- le déchargement du module emballé de balles (B1, B2) sur la surface, au niveau d'un site de stockage.

11. Procédé selon la revendication 10 comprenant en outre les étapes suivantes :
- le rechargement du module de balles (B1, B2), depuis la surface, au niveau du site de stockage, sur (1) l'ensemble de chargement (15) ou (2) le second ensemble plateforme (25) ;
- le transfert des balles (B1, B2) jusqu'au premier ensemble plateforme (7) ; et
- le déchargement du module de balles depuis (1) l'ensemble de chargement (15) ou (2) le second ensemble plateforme (25) sur la surface, au niveau du second site.

12. Procédé selon la revendication 10 ou la revendication 11, dans lequel l'ensemble de chargement (15) comprend un premier bras (4) comprenant une première courroie transporteuse (16) et un second bras (24) comprenant une seconde courroie transporteuse (18) ; le premier ensemble plateforme (7) comprenant deux convoyeurs (35) généralement parallèles et le second ensemble plateforme (25) comprenant deux convoyeurs (39) généralement parallèles.

13. Procédé selon l'une quelconque des revendications 10 à 12, dans lequel l'ensemble de chargement (15), le premier ensemble plateforme (7) et le second ensemble plateforme (25) ont, chacun, un axe central longitudinal commun (A).

14. Procédé selon l'une quelconque des revendications 10 à 13, comprenant en outre le scellement automatique du matériau d'emballage avant ou pendant le déchargement des modules emballés de balles (B1, B2) sur la surface.

15. Procédé selon l'une quelconque des revendications 10 à 14, dans lequel les balles (B1, B2) sont des balles de fourrage.

16. Procédé selon la revendication selon l'une quelconque des revendications 10 à 15, dans lequel les modules de balles (B1, B2) sont emballés et les modules emballés de balles (B1, B2) sont déchargés simultanément sur la surface.

17. Procédé selon l'une quelconque des revendications 10 à 16, dans lequel le module de balles (B1, B2) est emballé pendant qu'il est chargé, tout en étant transféré jusqu'à un second site et/ou tout en étant déchargé.

18. Procédé selon l'une quelconque des revendications 10 à 17, comprenant en outre le déballage des balles (B1, B2) avant que les balles (B1, B2) soient rechargées, qu'elles soient transférées jusqu'à un second site et/ou qu'elles soient déchargées.

19. Procédé de collecte et d'emballage de balles (B1, B2) qui reposent sur une surface, ledit procédé comprenant les étapes suivantes :
- la fourniture d'un appareil (5) permettant de collecter et d'emballer des balles ;
- dans lequel l'appareil (5) comprend un premier ensemble plateforme (7) permettant de supporter et de transporter une balle (B1, B2) ; un ensemble de chargement (15) permettant de soulever une balle (B1, B2), depuis la surface, et de la transporter jusqu'au premier ensemble plateforme (7), l'ensemble de chargement (15) étant fixé pour pivoter au premier ensemble plateforme (7) ; un second ensemble plateforme (25) permettant de transporter les balles (B1, B2), le second ensemble plateforme (25) étant fixé pour pivoter au premier ensemble plateforme (7) ; et un dispositif d'emballage de balles (20) monté sur le second ensemble plateforme (25) afin d'emballer les balles (B1, B2),
- le chargement d'une balle (B1, B2), depuis la surface sur l'ensemble de chargement (15) de l'appareil (5) ;
- le transfert de la balle (B1, B2), depuis l'ensemble de chargement (15) jusqu'au premier ensemble plateforme (7) ;
- le transfert de la balle (B1, B2) jusqu'au second ensemble plateforme (25) et l'emballage de la balle (B1, B2) ; et
- le déchargement de la balle (B1, B2) sur la surface, dans lequel les étapes de chargement, d'emballage et de déchargement sont exécutées suivant un axe central longitudinal commun (A).

20. Procédé selon la revendication 19, dans lequel l'ensemble de chargement (15), le premier ensemble plateforme (7) et le second ensemble plateforme (25) ont, chacun, un axe central longitudinal commun (A).

21. Procédé selon l'une quelconque des revendications 19 à 20, dans lequel l'ensemble de chargement comprend un premier bras (4) comprenant une première courroie transporteuse (16) et un second bras (24) comprenant une seconde courroie transporteuse (18) ; le premier ensemble plateforme (7) comprend deux convoyeurs (35) généralement parallèles et le second ensemble plateforme (25) comprend deux convoyeurs (39) généralement parallèles.

22. Procédé selon l'une quelconque des revendications 19 à 21, dans lequel la balle (B1, B2) est simultanément emballée et déchargée sur la surface.

23. Procédé d'emballage d'une rangée sensiblement continue de balles (B1, B2) qui reposent sur une surface, ledit procédé comprenant les étapes suivantes :
- la fourniture d'un appareil (5) permettant de collecter et d'emballer des balles ;
- dans lequel l'appareil (5) comprend un premier ensemble plateforme (7) permettant de supporter et de transporter une balle (B1, B2) ; un ensemble de chargement (15) permettant de soulever une balle (B1, B2), depuis la surface, et de la transporter jusqu'au premier ensemble plateforme (7), l'ensemble de chargement (15) étant fixé pour pivoter au premier ensemble plateforme (7) ; un second ensemble plateforme (25) permettant de transporter les balles (B1, B2), le second ensemble plateforme (25) étant fixé pour pivoter au premier ensemble plateforme (7) ; et un dispositif d'emballage de balles (20) monté sur le second ensemble plateforme (25) afin d'emballer les balles (B1, B2),
- le chargement des balles (B1, B2) dans la rangée, depuis la surface, sur l'ensemble de chargement (15) de l'appareil (5) d'emballage des balles ;
- le transfert des balles (B1, B2), depuis l'ensemble de chargement (15) jusqu'au premier ensemble plateforme (7) ;
- le transfert des balles (B1, B2) jusqu'au second ensemble plateforme (25) et l'emballage des balles (B1, B2) chargées alors que l'appareil (5) continue à charger des balles (B3, B4) supplémentaires ; et
- le déchargement des balles (B1, B2) emballées alors que l'appareil (5) continue à charger des balles (B3, B4) supplémentaires.

24. Procédé selon la revendication 23, dans lequel les balles (B1, B2) sont déchargées sur la surface sensiblement au même point que celui auquel elles avaient été chargées.
